# FASCICULE DE BREVET EUROPEEN

(11) **EP 2 026 884 B1**
(45) Date de publication et mention de la délivrance du brevet: **09.03.2016**
(21) Numéro de dépôt: 06841963.9
(22) Date de dépôt: 15.12.2006
(51) Int. Cl.: A62D 5/00

(54) **MATERIAU TEXTILE COMPOSITE ET ARTICLE DE PROTECTION POUR APPLICATIONS NRBC**
VERBUNDTEXTILMATERIAL UND SCHUTZARTIKEL FÜR NRBC-ANWENDUNGEN
COMPOSITE TEXTILE MATERIAL AND ARTICLE OF PROTECTION FOR NRBC APPLICATIONS

(30) Priorité: 19.12.2005 FR 0512911
(43) Date de publication de la demande: 25.02.2009
(73) Titulaire: Paul Boye Technologies, 34200 Sète (FR)
(72) Inventeur: BOYE Jacques, F-34200 Sete (FR)
(74) Mandataire: Combenègre, Jean-Paul
(86) Numéro de dépôt international: PCT/FR2006/002760
(87) Numéro de publication internationale: WO 2007/071835

(56) Documents cités:
- EP-A- 1 092 471
- FR-A- 2 678 172
- US-A1- 2001 018 095
- US-A1- 2005 042 400

## Description

La présente invention concerne un matériau textile composite notamment du type protégeant contre les agressions nucléaire, radiologique, biologique et chimique dites N.R.B.C ou encore dans le domaine militaire qualifiées de toxiques de guerre ainsi que des articles de protection fabriqués à partir dudit matériau.

La protection contre les risques NRBC (Nucléaire, Radiologique, Biologique et Chimique) nécessite l'emploi de divers articles de protection (tenues de protection, combinaisons gants, chaussettes, cagoules, ponchos couvrant en partie ou en totalité le corps de l'utilisateur etc, systèmes ou appareils de filtration d'air...) destinés à éviter le contact des agents toxiques (sous forme liquide ou gazeuse) avec la peau ou les muqueuses de l'utilisateur. Ainsi, dans l'art antérieur deux gammes d'articles de protection ont été développées : ceux réalisés à partir de matériaux étanches et ceux mettant en oeuvre des matériaux perméables.

Dans le premier cas, le porteur est parfaitement protégé de la menace extérieure, mais son corps ne peut échanger de calories avec le milieu extérieur. Le port prolongé de ce type de tenue conduit donc irrémédiablement à des problèmes d'hyperthermie pouvant devenir mortels.

Afin de pallier ce problème, des tenues employant des matériaux perméables à l'air ont été mises au point. Ces tenues utilisent un ensemble de matériaux textiles comportant plusieurs couches constituées en général d'une couche externe -côté environnement extérieur à l'utilisateur-, d'une couche de matériau filtrant et d'une couche interne -côté utilisateur-, aux caractéristiques et fonctions suivantes :
La couche extérieure : elle est constituée par un textile extérieur dont les fonctions principales sont d'assurer la robustesse de la tenue - résistance à l'abrasion et à la déchirure - et de garantir la non-pénétration des agents agresseurs sous forme liquide. Cette non-pénétration est généralement obtenue par l'application d'un traitement hydrophobe et oléophobe sur le textile extérieur, comme décrit par exemple dans le document FR 2 678 172.
La couche de matériau filtrant : elle assure la filtration des toxiques sous forme gazeuse grâce aux particules de carbone adsorbant qu'elle contient. Les particules de carbones activé sont généralement collées sur un support textile ou sur un support non-tissé. On peut retenir comme exemples de ces technologies Les mousses imprégnées de poudre dé charbon actif comme décrits dans les documents FR 2.678.172; US 5.277.963 et les billes de carbone activé collées sur un textile comme décrit dans US 5.334.436.

La couche de matériau filtrant peut aussi se préster sous la forme d'un tissu de carbone activé comme enseigné dans US 5,731,065. La couche interne : elle est constituée d'un textile de préférence souple et assure le confort du porteur en évitant le contact direct du matériau filtrant avec la peau. Elle intervient aussi au niveau du stockage de la sueur.

US 2001/018095 décrit un matériau ayant une couche extérieure non tissée contenant des microfobres, une couche intérieure faite de latex et d'une couche intermédiaire contenant un biocide. US 2005/042400 décrit un matériau comprenant une couche de polypropylène spunbound non-tissée et une couche de polyéthylène microporeux.

### PROBLEMES RESTANT A RESOUDRE

Le problème majeur des matériaux pour tenues de protection de l'état de la technique réside dans leur incapacité réelle à arrêter la menace biologique. Par ailleurs, la menace biologique, autrement dit les agressions par des micro-organismes pathogènes, qu'elle soit de nature bactérienne, virale ou sporulée ou d'une autre nature, est véhiculée par le biais d'un agent solide ou liquide, notamment de type aérosol.

L'arrêt de particules, liquides ou solides, en particulier un aérosol d'environ 0,1 micron à environ 10 microns, reste problématique.

Les solutions antérieures de protection contre les aérosols biologiques de type NRBC résident dans l'adaptation des matières constitutives de la tenue de protection à la menace.

Ainsi, il est connu d'utiliser un matériau étanche, obtenu par laminage d'un film ou par « coating », afin d'opposer à la menace d'aérosol biologique un film continu ne laissant passer aucune particule - comme enseigné dans le document FR8917065). Ce type de matériau est particulièrement efficace contre la pénétration des particules solides ou liquides mais présente l'inconvénient majeur d'être étanche à l'air. Le port de vêtements de protection NRBC réalisés à partir de ces matériaux conduit invariablement à un stress thermique important qui limite la durée d'utilisation du vêtement.

Des évolutions de ces matériaux, étanches à l'air mais présentant un perméabilité à la vapeur d'eau, ont été proposées du type membrane semi-perméable comme par exemple celle vendue sous la dénomination commerciale GORETEX® mais ne permettent pas de garantir le niveau de confort thermique offert par les matériaux perméables à l'air.

Dans le cas des matériaux de protection perméables à l'air, une diminution de la pénétration des aérosols a pu néanmoins être obtenue par l'intermédiaire d'une réduction de la perméabilité à l'air du complexe protecteur.

La perméabilité telle que décrite dans la présente invention est mesurée selon la norme NF EN ISO 9237.

Cependant, la diminution de la perméabilité à l'air influe considérablement sur le confort de la tenue, qui lui est quantifiable par la perméabilité à la vapeur d'eau.

La perméabilité à la vapeur d'eau telle qu'enseignée dans la présente invention est mesurée par la résistance dite évaporative selon la norme EN 31092 - ISO 11092.

Ainsi, la réduction de la perméabilité à l'air des matériaux protecteurs de l'art antérieur, quelle que soit leur composition, induit une augmentation de la résistance évaporative et donc conduit inévitablement à une forte diminution du confort en particulier des articles de protection telles des tenues.

Il existe donc un besoin d'un matériau, qui garantisse une protection efficace contre les agressions NRBC, notamment du type sous forme d'aérosol biologique.

Il est également souhaitable que ce matériau assure à un article de protection fabriqué à partir de ce dernier un confort réel notamment par la conservation d'une propriété de perméabilité à l'air.

La présente invention vise justement à satisfaire ce besoin.

Aussi la présente invention concerne tout d'abord un matériau textile composite pour applications NRBC comprenant un premier matériau non-tissé apte à faire barrière physique à la pénétration de micro-organismes et un deuxième matériau apte à piéger par absorption et/ou adsorption les dits micro-organismes arrêtés par ledit premier matériau ledit deuxième matériau étant choisi parmi des polymères thermoplastiques et consistant en un polyamide ou un polyester.

Le matériau selon l'invention présente les avantages suivants :
- efficacité améliorée quant à l'arrêt des aérosols biologiques
- stockage dès micro-organismes avant de les détruire
- perméabilité accrue à l'air, ce qui garantit un confort réel

Le matériau selon l'invention présente en outre les avantages ou caractéristiques complémentaires ou alternatives suivantes :
- ledit premier matériau est un non-tissé choisi dans le groupe constitué par des polymères thermoplastiques notamment polyester, polyoléfine, par de la viscose, de préférence ledit matériau est une polyoléfine, et particulier un polypropylène ou un matériau obtenu par un procédé choisi parmi les technologies spun, meltblown, spun meltblown spun, spun meltblown meltblown spun dites SMS, SMMS, respectivement de préférence ce procédé est le SMS.
- Jedit matériau selon l'invention présente une perméabilité à l'air.
- Ladite perméabilité à l'air dudit matériau selon l'invention est choisie dans un intervalle de 10 l/m².s à 1000 l/m².s mesurée à 100 Pa, de préférence d'environ 100 l/m².s à environ 500 l/m².s
- ledit deuxième matériau est .traité par un procédé choisi parmi les techniques de greffage ou d'imprégnation de manière à le rendre apte à détruire les micro-organismes absorbés et/ou adsorbés par le dit deuxième matériau.
- ledit deuxième matériau comporte au moins un agent apte à détruire des micro-organismes, en particulier cet agent est du typé biocide, de préférence greffé sur ledit deuxième matériau.
- ledit matériau selon l'invention comporte en outre un troisième matériau support apte à supporter le dit deuxième matériau.
- ledit matériau support est choisi dans le groupe constitué par dès mousses, des mailles, des tissus, des non-tissés.

La présente invention vise également un article de protection fabriqué à partir du matériau selon l'invention.

Selon un mode de réalisation préféré l'article de protection selon l'invention est choisi parmi des tenues de protection, des combinaisons, des gants, des chaussettes, des cagoules, des ponchos, couvrant en partie ou en totalité le corps de l'utilisateur, des systèmes ou appareils de filtration d'air.

La : présente invention va maintenant être décrite de manière plus détaillée dans ses caractéristiques et avantages à l'aide d'exemples de modes de réalisation donnés à titre purement illustratif et non limitatif et des dessins annexés dans lesquels :
La Figure 1 représente un exemple de matériau textile composite (14) conforme à la présente invention comportant un premier matériau barrière constitué d'un non-tissé (10), et un deuxième matériau constitué par un matériau support en non-tissé imprégné d'une poudre (12) absorbant les micro-organismes.
La Figure 2 représente un exemple d'article fabriqué à partir d'un matériau textile composite (20) conforme à la présente invention. Cet article est constitué par le matériau de la figure 1 (14) pris en sandwich entre un tissu extérieur en coton polyester (16) et une couche de matériau filtrant en mailles de carbone activées, thermocollée sur un textile confort (18), notamment en polyester.
La Figure 3 reprend l'exemple illustré à la Figure 2, la couche de matériau filtrant, étant une mousse imprégnée de carbones activés (22).
La Figure 4 est un graphe illustrant la relation linéaire existant entre la résistance évaporative et la perméabilité à l'air et
La Figure 5 est un graphe représentant l'évolution de la pénétration d'un aérosol biologique en fonction de la perméabilité à l'air.

La présente invention permet ainsi de « gérer » le devenir des micro-organismes qui sont arrêtés par le matériau selon l'invention. Les micro-organismes ainsi stoppés, au cours de la période d'utilisation d'un article de protection NRBC perméable, généralement utilisé pendant 24 heures, ne peuvent plus se multiplier ni migrer vers la peau.

L'article de protection selon la présente invention vise aussi à empêcher la migration des micro-organismes stoppés, à les détruire, selon un mode de réalisation préféré.

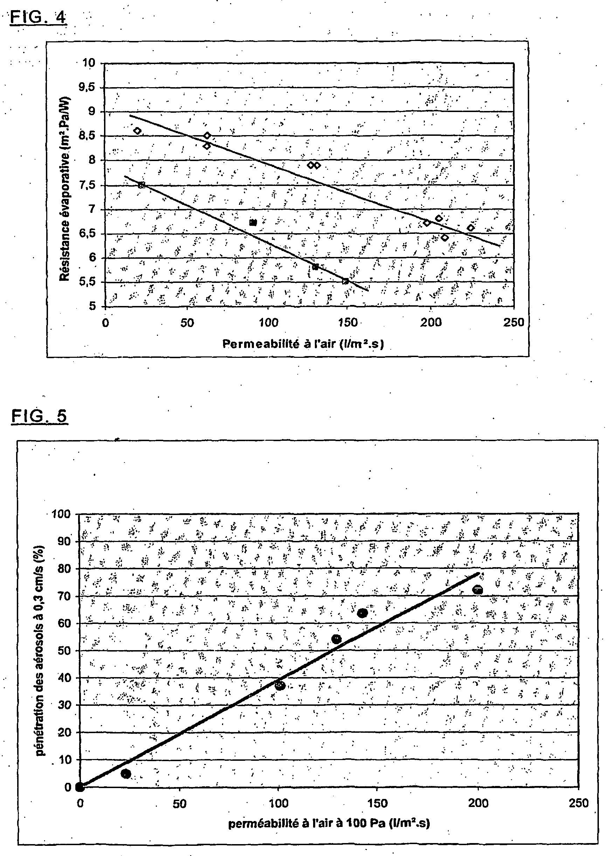

L'inventeur de la présente invention a observé que certains non-tissés permettent d'échapper à la relation linéaire (figure 5) existant entre la perméabilité à l'air et le pouvoir d'arrêt d'un aérosol biologique.

### EXEMPLES

### Exemple 1 : Matériau textile composite conforme à la présente invention

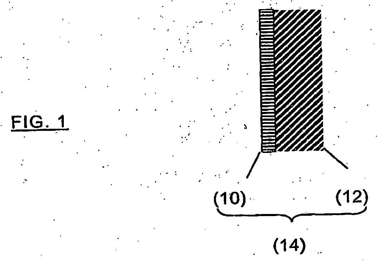

Une amélioration notable des performances contre les aérosols biologiques est obtenue par l'utilisation - voir figure 1 - d'un non-tissé barrière (10) de typé SMS et d'une masse surfacique de 35 g/m² de polypropylène qui a été traité de manière à présenter des propriétés de résistance à l'eau et aux alcools.

Ce matériau connu est mis dans le commerce sous la référence « SMS35 » de la société PGI. Ce matériau possède une perméabilité à l'air d'environ 270 l/m².s.

Un matériau textile composite selon l'invention (14) utilisant le non tissé SMS35 (10) a été réalisé. Ce matériau est obtenu par contre collage de manière classique d'un non-tissé (10) sur une couche d'un matériau filtrant (12), composée d'un non-tissé polyester imprégné de 40 g/m² d'une poudre absorbante telle qu'enseignée dans le document FR9912619.

Ce matériau textile composite (14) a été testé selon un protocole de pénétration forcée de micro-organismes (de type bacillus globigii) sous forme d'aérosol biologique, à des vitesses de pénétration d'environ 0,3 cm/s et 1,5 cm/s. Ce protocole met en oeuvre un analyseur tel que celui décrit par les laboratoires TNO de Rijswiyk aux Pays-Bas.

Les propriétés protectrices de ce matériau conforme à la présente invention (14) sont comparées à un matériau d'une tenue NRBC classique caractérisée par une faible perméabilité à l'air.

Les résultats sont donnés dans le TABLEAU 1 ci-dessous

**TABLEAU 1**

| | Matériau de l'invention (14) | Matériau de l'état de la technique |
|---|---|---|
| Perméabilité à l'air (100 Pa) | 90 l/m².s | 23 l/m².s |
| Pénétration d'un aérosol à 0.3 cm/s | 3.8% | 29 % |
| Pénétration d'un aérosol à 1,5 cm/s | 9,1% | 42 % |

Il apparaît que le matériau textile composite selon l'invention, bien que de perméabilité à l'air trois fois supérieure au matériau connu antérieur considéré, permet une protection nettement améliorée contre les micro-organismes sous forme d'aérosol biologique.

### Exemple 2 : Matériau textile composite préféré conforme à la présente invention

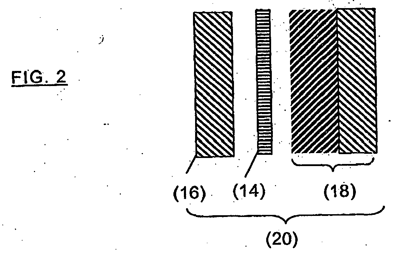

Dans cet autre mode de réalisation, le matériau textile composite de l'invention (14) cité à l'exemple 1 a été inséré dans un matériau de l'art antérieur comme décrit à la Fig. 2. Ce matériau est ici utilisé comme une doublure libre, intermédiaire entre un tissu extérieur (16) et une couche de matériau filtrant (18). La couche de matériau filtrant (18) est dans ce cas précis constituée d'un carbone activé sous forme d'une maille - notamment une maille telle que celle mise dans le commerce par la société Charcoal Cloth et vendue sous la référence FM3K - qui est thermocollée sur un textile confort polyester. Le tissu extérieur (16) utilisé est un tissu en coton polyester.

L'ensemble matériaux (14) + (16) ± (18) est référencé (20) et représente un mode de réalisation préféré de la présente invention. Il est comparé à un matériau classique antérieur comportant les mêmes constituants que (20) à l'exception du matériau (14).

Les résultats sont donnés dans le TABLEAU 2 ci-dessous.

**TABLEAU 2**

| | Matériau de l'invention (20) | Matériau de l'art antérieur |
|---|---|---|
| Perméabilité à l'air (100 Pa) | 95,2 l/m².s | 149,2 l/m².s |
| Pénétration d'un aérosol à 0,3 cm/s | 1,1 % | 63,6% |
| Pénétration d'un aérosol à 1,5 cm/s | 9,8 % | 74% |
| Résistance évaporative | 6,4 m².Pa/W | 5,5 m².Pa/W |

Il apparaît que l'utilisation d'un matériau (20) conformé à la présente invention permet de réduire considérablement la pénétration des aérosols biologiques, tout en conservant une forte perméabilité à l'air d'environ 95 l/m².s mesurée à 100 Pa.

Ce résultat est particulièrement remarquable.

En effet, si nous nous référons à la figure 5 nous constatons qu'un matériau de l'art antérieur présentant une perméabilité à l'air d'environ 95 l/m².s mesurée à 100 Pa conduit à une valeur de pénétration d'un aérosol biologique de 40%.

Avec un matériau conforme à la présente invention tel que réalisé à l'exemple 2 comme expliqué ci-dessus, la pénétration reste limitée, de maniére tout à fait surprenante, à 1 %.

### Exemple 3 : Matériau textile composite le plus préféré conforme à la présente invention

Le matériau selon l'invention de l'Exemple 2 a été modifié dans sa composition en ce que la couche de matériau filtrant (22) telle qu'illustrée est ici composée d'une mousse imprégnée de carbones activés telle qu'enseignée dans le document FR9107860.

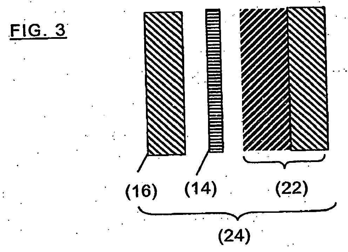

Le matériau textile composite selon l'invention (24) est illustré à la Fig. 3 et est comparé à un matériau classique antérieur comportant les mêmes constituants à l'exception de la couche de matériau filtrant (14).

Les résultats sont donnés dans le TABLEAU 3 ci-dessous

**TABLEAU 3**

| | Matériau selon l'invention (24) | Matériau de l'art antérieur |
|---|---|---|
| Perméabilité à l'air (100 Pa) | 94,9 l/m².s | 200 l/m².s |
| Pénétration d'un aérosol à 0,3 cm/s | 2,4 % | 72 % |
| Pénétration d'un aérosol à 1,5 cm/s | 14 % | 77 % |
| Résistance évaporative | 7,6 m².Pa/W | 6,6 m².Pa/W |

Il apparaît que l'utilisation d'un matériau (24) conforme à la présente invention permet de réduire considérablement la pénétration des aérosols biologiques, tout en conservant une forte perméabilité à l'air d'environ 95 l/m².s mesurée à 100 Pa.

Il est à noter en outre que la matériau de l'invention présente une faible résistance évaporative qui garantit un confort amélioré à l'utilisateur d'un article de protection fabriqué à partir du matériau selon la présente invention.

Ce résultat est particulièrement intéressant comparé à ceux obtenus jusqu'ici à l'aide de matériaux classiques de l'art antérieur.

## Revendications

1. Matériau textile composite pour applications NRBC comprenant un premier matériau non-tissé apte à faire barrière physique à la pénétration de micro-organismes et un deuxième matériau apte à piéger par absorption et/ou adsorption lesdits micro-organismes arrêtés par ledit premier matériau, ledit deuxième matériau étant choisi parmi des polymères thermoplastiques et consistant en un polyamide ou un polyester.

2. Matériau selon la revendication 1, **caractérisé en ce que** ledit premier matériau non-tissé est choisi dans le groupe constitué par une polyoléfine, par de la viscose, de préférence ledit matériau est une polyoléfine, et en particulier un polypropylène ou un matériau obtenu par un procédé choisi parmi les technologies spun, meltblown, spun meltblown spun, spun meltblown meltblown spun dites SMS, SMMS, respectivement de préférence ce procédé est le SMS.

3. Matériau selon l'une quelconque des revendications précédentes, **caractérisé en ce qu'**il présente une perméabilité à l'air.

4. Matériau selon la revendication 3, **caractérisé en ce que** la perméabilité à l'air est choisie dans un intervalle de 10 l/m².s à 1000 l/m².s mesurée à 100 Pa, de préférence d'environ 100 l/m².s à environ 500 l/m².s.

5. Matériau selon l'une quelconque des revendications précédentes, **caractérisé en ce que** ledit deuxième matériau est traité par un procédé choisi parmi les techniques de greffage ou d'imprégnation de manière à le rendre apte à détruire les micro-organismes absorbés et/ou adsorbés par le dit deuxième matériau.

6. Matériau selon la revendication précédente, **caractérisé en ce que** ledit deuxième matériau comporte au moins un agent apte à détruire des micro-organismes, en particulier cet agent est du type biocide, de préférence greffé sur ledit deuxième matériau.

7. Matériau selon l'une quelconque des revendications précédentes, **caractérisé en ce qu'**il comporte en outre un troisième matériau support apte à supporter le dit deuxième matériau.

8. Matériau selon la revendication précédente, **caractérisé en ce que** ledit matériau support est choisi dans le groupe constitué par des mousses, des mailles, des tissus, des non-tissés.

9. Article de protection réalisé à partir d'un matériau textile composite pour applications NRBC selon l'une quelconque des revendications précédentes.

10. Article selon la revendication 9, **caractérisé en ce qu'**il est choisi parmi des tenues de protection, des combinaisons, des gants, des chaussettes, des cagoules, des ponchos, couvrant en partie ou en totalité le corps de l'utilisateur, des systèmes ou appareils de filtration d'air.

## Patentansprüche

1. Verbundtextilmaterial für NRBC-Anwendungen, umfassend ein erstes nicht-gewebtes Material, das geeignet ist, eine physische Barriere für das Eindringen von Mikroorganismen zu bilden, und ein zweites Material, das geeignet ist, durch Absorption und/oder Adsorption die von dem ersten Material aufgehaltenen Mikroorganismen einzufangen, wobei das zweite Material unter den thermoplastischen Polymeren ausgewählt ist und in einem Polyamid oder einem Polyester besteht.

2. Material nach Anspruch 1, **dadurch gekennzeichnet, dass** das erste nicht-gewebtes Material in der Gruppe ausgewählt ist, die von einem Polyolefin, von Viskose gebildet ist, wobei das Material vorzugsweise ein Polyolefin und insbesondere ein Polypropylen oder ein Material ist, das durch ein Verfahren gewonnen wird, das unter den Spun-, Meltblown-, Spun-Meltblown-Spun-, Spun-Meltblown-Meltblown-Spun-Technologien, SMS, SMMS genannt, ausgewählt ist, wobei dieses Verfahren vorzugsweise das SMS-Verfahren ist.

3. Material nach einem der vorhergehenden Ansprüche, **dadurch gekennzeichnet, dass** es eine Luftdurchlässigkeit aufweist.

4. Material nach Anspruch 3, **dadurch gekennzeichnet, dass** die Luftdurchlässigkeit in einem Bereich von 10 l/m².s bis 1000 l/m².s, gemessen bei 100 Pa, vorzugsweise von ungefähr 100 l/m².s bis ungefähr 500 l/m².s, ausgewählt ist.

5. Material nach einem der vorhergehenden Ansprüche, **dadurch gekennzeichnet, dass** das zweite Material durch ein Verfahren, das unter den Techniken des Pfropfens oder Imprägnierens ausgewählt ist, behandelt wird, um es dazu zu eignen, die von dem zweiten Material absorbierten und/oder adsorbierten Mikroorganismen zu zerstören.

6. Material nach dem vorhergehenden Anspruch, **dadurch gekennzeichnet, dass** das zweite Material mindestens einen Wirkstoff umfasst, der geeignet ist, Mikroorganismen zu zerstören, wobei dieser Wirkstoff insbesondere vom Typ Biozid ist, das vorzugsweise auf das zweite Material gepfropft ist.

7. Material nach einem der vorhergehenden Ansprüche, **dadurch gekennzeichnet, dass** es ferner ein drittes Trägermaterial umfasst, das geeignet ist, das zweite Material zu tragen.

8. Material nach dem vorhergehenden Anspruch, **dadurch gekennzeichnet, dass** das Trägermaterial in der Gruppe ausgewählt ist, die von Schäume, Maschen, Geweben, Nichtwebstoffen gebildet ist.

9. Schutzartikel, der aus einem Verbundtextilmaterial für NRBC-Anwendungen nach einem der vorhergehenden Ansprüche hergestellt ist.

10. Artikel nach Anspruch 9, **dadurch gekennzeichnet, dass** er unter Schutzkleidung, Anzügen, Handschuhen, Socken, Schutzhauben, Ponchos, die den Körper des Benutzers teilweise oder zur Gänze bedecken, Luftfiltersystemen oder -geräten ausgewählt ist.

## Claims

1. A composite textile material for NRBC applications, comprising a first non-woven material able to create a physical barrier to the penetration of micro-organisms and a second material able to trap - by absorption and/or adsorption - said micro-organisms being stopped by said first material, said second material being selected from thermoplastic polymers and consisting of a polyamide or a polyester.

2. A material according to claim 1, **characterized in that** said first non-woven material is selected from the group consisting of a polyolefin, a viscose, preferably said material is a polyolefin and in particular a polypropylene or a material that is obtained by a process that is selected from the technologies spun, meltblown, spun meltblown spun, spun meltblown meltblown spun called SMS, SMMS, respectively, this process is preferably SMS.

3. A material according to anyone of the precedent claims, **characterized in that** it displays an air permeability.

4. A material according to claim 3, **characterized in that** the air permeability is selected within an interval of 10 l/m².s to 1000 l/m².s measured at 100 Pa, preferably from about 100 l/m².s to about 500 l/m².s.

5. A material according to anyone of the precedent claims, **characterized in that** said second material is treated by a process that is selected among the grafting or impregnation techniques so as to enable it to destroy the micro-organisms that are absorbed and/or adsorbed by said second material.

6. A material according to the precedent claim, **characterized in that** said second material comprises at least one agent able to destroy micro-organisms, this agent being particularly of the biocide type, preferably grafted on said second material.

7. A material according to anyone of the precedent claims, **characterized in that** it further comprises a third substrate material that can support said second material.

8. A material according to the precedent claim, **characterized in that** said substrate material is selected from the group consisting of foams, meshes, fabrics and non-woven fabrics.

9. A protective item produced from a composite textile material for NRBC applications according to anyone of the precedent claims.

10. An item according to claim 9, **characterized in that** it is selected from protective clothing, overalls, gloves, socks, hoods, ponchos, covering the body of the user partially or completely, air filtration systems or units.
